(19) Europäisches Patentamt
European Patent Office
Office européen des brevets

(11) Veröffentlichungsnummer: **0 204 938**
**B1**

(12) # EUROPÄISCHE PATENTSCHRIFT

(45) Veröffentlichungstag der Patentschrift: **26.10.88**

(51) Int. Cl.⁴: **C 08 G 18/72**, C 08 G 18/08, C 08 G 18/66, C 08 G 18/32, C 08 G 18/73, C 08 G 18/75, C 09 D 3/72

(21) Anmeldenummer: **86105861.8**

(22) Anmeldetag: **28.04.86**

(54) **Wässrige polyurethandispersionen und ihre Verwendung als Beschichtungsmittel.**

(30) Priorität: **10.05.85 DE 3516806**

(43) Veröffentlichungstag der Anmeldung: **17.12.86 Patentblatt 86/51**

(45) Bekanntmachung des Hinweises auf die Patenterteilung: **26.10.88 Patentblatt 88/43**

(84) Benannte Vertragsstaaten: **DE FR GB IT**

(56) Entgegenhaltungen:
**FR - A - 2 230 690**
**US - A - 3 061 559**

(73) Patentinhaber: **BAYER AG, Konzernverwaltung RP Patentabteilung, D-5090 Leverkusen 1 Bayerwerk (DE)**

(72) Erfinder: **Lorenz, Otto, Prof. Dr., Kurbrunnenstrasse 22, D-5100 Aachen (DE)**
Erfinder: **Rose, Gerd, Dl., Freientsbenden 51, B-4731 Eynatten (BE)**

**EP 0 204 938 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft wässrige Dispersionen von anionisch modifizierten Polyurethanen auf Basis von ausgewählten Ausgangsmaterialien, die sich in hervorragender Weise zur Herstellung von harten, haftfesten und zähen Überzügen einer hohen Wasserfestigkeit verarbeiten lassen, und die Verwendung der Dispersionen zur Herstellung von Überzügen auf beliebigen Substraten.

Stabile, wässrige Dispersionen von ionisch modifizierten Polyurethanen sind bereits bekannt [vgl. z.B. DE-PS 1 178 586, DE-AS 1 237 306, DE-OS 1 495 745, DE-OS 1 770 068, DE-OS 2 019 324 oder auch D. Dieterich et al., Angew. Chem., 82, 53 (1970)]. Die in diesen Literaturstellen beschriebenen Dispersionen beruhen auf dem Prinzip, in eine makromolekulare Kette eines Polyurethanmoleküls hydrophile Zentren einzubauen. Diese hydrophilen Zentren oder sogenannten inneren Emulgatoren sind in den bekannten Dispersionen insbesondere ionische Gruppen, d.h. kationische Ammoniumgruppen oder anionische Carboxylat- oder Sulfonatgruppen.

Obwohl die bekannten wässrigen Polyurethandispersionen zur Herstellung von hochwertigen Überzügen geeignet sind, weisen sie noch einige verbesserungswürdige Nachteile auf. Insbesondere genügen oftmals die Wasserfestigkeit, die Härte, die Zähigkeit und die Haftfestigkeit der aus den bekannten Dispersionen von ionisch modifizierten Polyurethanen hergestellten Überzüge nicht allen Anforderungen der Praxis in vollem Umfang.

Es war daher die der Erfindung zugrundeliegende Aufgabe, wässrige Dispersionen von anionisch modifizierten Polyurethanen zur Verfügung zu stellen, die sich bezüglich der letztgenannten Eigenschaften vorteilhaft von den bislang bekannten Dispersionen anionisch modifizierter Polyurethane unterschieden.

Diese Aufgabe konnte durch die Bereitstellung der nachstehend näher beschriebenen erfindungsgemässen Dispersionen gelöst werden. Beschichtungen, die unter Verwendung der erfindungsgemässen Dispersionen zugänglich sind, zeichnen sich insbesondere durch eine hervorragende Wasserfestigkeit, Härte, Zähigkeit und Haftfestigkeit auf dem jeweiligen Substrat aus und sind bezüglich dieser Eigenschaften den bislang bekanntgewordenen wässrigen Dispersionen anionisch modifizierter Polyurethane klar überlegen.

Gegenstand der Erfindung sind wässrige Dispersionen von Carboxylatgruppen aufweisenden Polyurethanen auf Basis von Polyesterdiolen, organischen Diisocyanaten mit aliphatisch und/oder cycloaliphatisch gebundenen Isocyanatgruppen, niedermolekularen Glykolen und gegebenenfalls weiteren Aufbaukomponenten mit gegenüber Isocyanatgruppen reaktionsfähigen Wasserstoffatomen, dadurch gekennzeichnet, dass die dispergierten Polyurethane

a) 18 bis 40 Gew,-% an Struktureinheiten der Formel

$-CO-NH-R^1-NH-CO-$,

b) 0 bis 20 Gew.-% an Struktureinheiten der Formel

$-CO-NH-R^2-NH-CO-$,

c) 25 bis 70 Gew.-% an Struktureinheiten der Formel

$-O-R^3-O-$,

d) 8 bis 30 Gew.-% an Struktureinheiten der Formel

$-O-R^4-O-$ und

e) bis zu 25 Gew.-% an anderen, zumindest zum Teil Carboxylatgruppen tragenden Struktureinheiten aufweisen, wobei die Gesamtmenge an Carboxylatgruppen in den Polyurethanen bei 10 bis 60 Milliäquivalenten pro 100 g Feststoff liegt,

und wobei sich die genannten Prozentangaben auf das Gewicht des dispergierten Polyurethans beziehen und zu 100 ergänzen, und wobei

$R^1$ für den die Isocyanatgruppen von (über Urethan- und/oder Harnstoffgruppen in das Polyurethan eingebautem) 1,6-Diisocyanatohexan und/oder (über Urethan- und/oder Harnstoffgruppen in das Polyurethan eingebautem) 1-Isocyanato-3,3,5-trimethyl-5-isocyanatomethyl-cyclohexan verknüpfenden Kohlenwasserstoffrest steht,

$R^2$ für den die Isocyanatgruppen von (über Urethan- und/oder Harnstoffgruppen in das Polyurethan eingebautem) 4,4'-Diisocyanato-dicyclohexylmethan und/oder 1,4-Diisocyanatocyclohexan verknüpfenden Kohlenwasserstoffrest steht,

$R^3$ für den oder die, die endständigen Hydroxylgruppen von einem oder mehreren (über Urethangruppen in das Polyurethan eingebauten) Polyesterdiolen verknüpfenden Rest(e) steht, wobei in diesem Rest bzw. in diesen Resten mindestens zwei unterschiedliche Dicarbonsäuren über Estergruppen eingebaut vorliegen, und wobei der oder die Rest(e) $R^3$ zumindest zu 20 Gew.-% aus Phthalsäure und/oder Isophthalsäureeinheiten der Formel

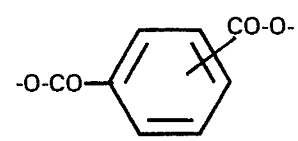

besteht bzw. bestehen, und

$R^4$ für den die Hydroxylgruppen von (über Urethangruppen in das Polyurethan eingebautem) 2,2-Bis-(4-hydroxycyclohexyl)-propan verknüpfenden Kohlenwasserstoff steht.

Gegenstand der Erfindung ist auch die Verwendung der erfindungsgemässen Dispersionen als Beschichtungsmittel für beliebige flexible oder nicht-flexible Substrate.

Wesentliche Aufbaukomponenten für die Herstellung der in den erfindungsgemässen Dispersionen vorliegenden anionischen Polyurethane sind

a) 1,6-Diisocyanatohexan (Hexamethylendiisocyanat) und/oder 1-Isocyanato-3,3,5-trimethyl-5-isocyanatomethyl-cyclohexan (IPDI) als wesentliche Diisocyanat-Komponente. Diese Diisocyanate können entsprechend der obengemachten Definition von $R^1$ bei der Herstellung der Polyurethane jedes für sich allein oder im Gemisch

miteinander in beliebigen Mischungsverhältnissen eingesetzt werden.

b) 4,4'-Diisocyanato-dicyclohexylmethan und/oder 1,4-Diisocyanatocyclohexan. Diese Diisocyanate werden gegebenenfalls zusammen mit den unter a) eingesetzten Diisocyanaten mitverwendet.

c) Polyesterdiole des aus ihrem Hydroxylgruppengehalt errechenbaren Molekulargewichtsbereichs 600 bis 2500, vorzugsweise 1000 bis 2000. Es können, entsprechend der obengemachten Definition von $R^3$, entweder nur ein Polyesterdiol-Typ oder auch Gemische mehrerer Polyesterdiole zum Einsatz gelangen. Erfindungswesentlich ist jedoch, dass das Polyesterdiol oder das Polyesterdiol-Gemisch, welches als Komponente c) zum Einsatz gelangt, mindestens zwei unterschiedliche Dicarbonsäuren in über Estergruppen eingebauter Form enthält, wobei mindestens zwei unterschiedliche Dicarbonsäuren, bezogen auf die Gesamtmenge der vorliegenden Dicarbonsäuren, in einer Menge von vorzugsweise jeweils mindestens 10 Gew.-% vorliegen. Eine weitere erfindungswesentliche Bedingung ist, dass Phthalsäure und/oder Isophthalsäure zwingend als zumindest eine der genannten Dicarbonsäuren in dem Polyesterdiol oder dem Polyesterdiolgemisch in einer solchen Menge vorliegt bzw. vorliegen, dass in der Komponente c) mindestens 20, vorzugsweise 20 bis 73,2 Gew.-% an Phthalsäure- und/oder Isophthalsäureeinheiten der obengenannten Formel vorliegen.

Die Komponente c) besteht somit entweder aus (i) zwei endständigen Hydroxylgruppen aufweisenden «Mischpolyestern», in denen, den genannten Bedingungen entsprechend, Phthalsäure und/oder Isophthalsäureeinheiten der obengenannten Formel und gegebenenfalls weitere Dicarbonsäurereste in über Estergruppen eingebauter Form vorliegen und/oder aus (ii) Polyesterdiol-Gemischen, in denen Polyesterdiole auf Basis der Phthalsäure und/oder Polyesterdiole auf Basis der Isophthalsäure und/oder Polyesterdiole auf Basis anderer Dicarbonsäuren in solchen Mengen vorliegen, die den obengemachten Definitionen entsprechen.

Geeignete «Mischpolyester» sind beispielsweise Polyesterdiole des obengenannten Molekulargewichtsbereichs auf Basis von Phthalsäure, Isophthalsäure und/oder Adipinsäure und den in derartigen Polyesterdiolen üblicherweise als Diolkomponente vorliegenden Diolen wie z.B. Ethylenglykol, 1,4-Dihydroxybutan, 1,6-Dihydroxyhexan und/oder 1,3-Dihydroxy-2,2-dimethyl-propan (Neopentylglykol). Im Falle der Verwendung von Polyesterdiol-Gemischen können die Einzelkomponenten der Gemische beispielsweise aus Polyesterdiolen aus Phthalsäure und den beispielhaft genannten Diolen, Polyesterdiolen aus Isophthalsäure und den beispielhaft genannten Diolen und/oder Polyesterdiolen auf Basis der Adipinsäure und den beispielhaft genannten Diolen bestehen. Selbstverständlich ist es auch möglich, die beispielhaft genannten Mischpolyester in Kombination mit den zuletzt genannten einfachen Polyesterdiolen einzusetzen, immer vorausgesetzt, dass die dann vorliegende Aufbaukomponente c) den obengemachten Definitionen entspricht.

d) 2,2-Bis-(4-hydroxycyclohexyl)-propan (Perhydrobisphenol A).

e) Weitere Aufbaukomponenten mit gegenüber Isocyanatgruppen reaktionsfähigen Gruppen. Hierzu gehören

e1) aliphatische Hydroxycarbonsäuren wie z.B. Glykolsäure, Milchsäure, Äpfelsäure, Weinsäure, Zitronensäure und insbesondere 2,2-Dimethylolpropionsäure. Diese Säuren können bei der Herstellung der Polyurethane als solche oder in zumindest teilweise neutralisierter Form, d.h. in Form der entsprechenden Carboxylate zum Einsatz gelangen. Falls zunächst die freien Säuren bei der Herstellung der Polyurethane eingesetzt werden, erfolgt im Anschluss an die Herstellung der Polyurethane eine zumindest teilweise Neutralisation der in das Polyurethan eingebauten Carboxylgruppen. Die Menge der zumindest teilweise neutralisierten Hydroxycarbonsäuren bzw. der Neutralisationsgrad wird im übrigen so bemessen, dass in den Polyurethanen 10 bis 60, vorzugsweise 15 bis 40, Milliäquivalente pro 100 g Feststoff an eingebauten Carboxylatgruppen vorliegen. Geeignete Neutralisationsmittel sind insbesondere tert. Amine wie z.B. Triethylamin, Diethylmethylamin, Dimethylethylamin, Trimethylamin, Triethanolamin oder N-Methyldiethanolamin. Auch im Falle der Verwendung von zumindest teilweise neutralisierten Hydroxycarbonsäuren stellen derartige Amine in ihrer Ammoniumform die bevorzugten Gegenionen dar. Ganz besonders bevorzugt werden die Art und die Menge der bei der Herstellung der Polyurethane mitverwendeten Hydroxycarbonsäuren oder ihrer Salze bzw. der Neutralisationsgrad so gewählt, dass in den Polyurethanen, bezogen auf Feststoff, 2 bis 7 Gew.-% an Struktureinheiten der Formel

$$-O-R^5-O-$$

vorliegen, wobei

$R^5$ für den die Hydroxylgruppen einer (über Urethangruppen in dem Polyurethan eingebauten), zumindest teilweise in der Ammoniumsalzform vorliegenden aliphatischen Dihydroxycarbonsäure eines maximalen Molekulargewichts von 300 verknüpfenden Rest steht. So entspräche z.B. im Falle der Verwendung von Ammoniumsalzen der Dimethylpropionsäure der Rest $R^5$ der Formel

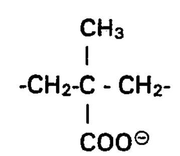

Weitere gegebenenfalls mitzuverwendende Aufbaukomponenten e) sind

e2) niedermolekulare Kettenverlängerungsmittel

des Molekulargewichtsbereichs 18 bis 300, d.h. Wasser oder Hydrazin (in Form von Hydrazinhydrat) oder einfache Diole, wie sie bereits als Aufbaukomponente für die Polyesterdiole oben beispielhaft erwähnt worden sind, oder einfache Diaminkettenverlängerungsmittel, wie z.B. Ethylendiamin, Hexamethylendiamin oder 4,4'-Diamino-dicyclohexylmethan.

Weitere gegebenenfalls mitzuverwendende Aufbaukomponenten e) sind

e3) nichtionisch-hydrophil modifizierte ein- oder zweiwertige Alkohole, wie z.B. die in US-PS 3 905 929, US-PS 4 190 566 oder US-PS 4 237 264 beispielhaft genannten nichtionischhydrophilen, eine oder zwei Hydroxylgruppen aufweisenden Aufbaukomponenten mit innerhalb von Polyetherketten eingebauten Ethylenoxideinheiten. Die Mitverwendung derartiger nichtionisch-hydrophiler Aufbaukomponenten ist allerdings weniger bevorzugt.

Weitere, gegebenenfalls mitzuverwendende Aufbaukomponenten e) sind beispielsweise

e4) blockierte Kettenverlängerungsmittel, d.h. beispielsweise die in DE-OS 2 725 589 beschriebenen Ketimine, die in US-PS 4 192 937 beschriebenen Oxazolidine oder die in US-PS 4 269 748 beschriebenen Azine.

Weitere gegebenenfalls mitzuverwendende Aufbaukomponenten e) sind beispielsweise

e5) verzweigend wirkende Verbindungen, wie mehrwertige Alkohole, z.B. Trimethylolpropan oder Glycerin, oder verzweigend wirkende Polyisocyanate, z.B. Tris-(6-isocyanatohexyl)-isocyanurat. Die Mitverwendung derartiger, verzweigend wirkender Aufbaukomponenten ist allerdings keineswegs bevorzugt und erfolgt, falls überhaupt, allenfalls in solchen Mengen, dass die mittlere Funktionalität im Sinne der Isocyanat-Additionsreaktion aller eingesetzten Aufbaukomponenten bei maximal 2,3, vorzugsweise maximal 2,1 liegt.

Die beispielhaft genannten Aufbaukomponenten werden bei der Herstellung der Polyurethane in solchen Mengen mitverwendet, dass die obengenannten Bedingungen bezüglich der auf die einzelnen Aufbaukomponenten zurückzuführenden Struktureinheiten erfüllt sind.

Die Herstellung der Polyurethane erfolgt in an sich bekannter Weise gemäss den Verfahren des bereits oben zitierten Standes der Technik.

Eine einfache Methode der Herstellung der erfindungsgemässen Polyurethandispersionen besteht beispielsweise darin, aus den Komponenten a) und gegebenenfalls b) einerseits und den Komponenten c), d) und den Hydroxylgruppen-aufweisenden Komponenten e) in der Schmelze bei 60 bis 150°C und/oder in acetonischer Lösung unter Einhaltung eines NCO/OH-Äquivalentverhältnisses von 1,8 : 1 bis 1,1 : 1 ein NCO-Prepolymer herzustellen, dieses gegebenenfalls in Aceton aufzunehmen und die acetonische Lösung mit einem Kettenverlängerungsmittel der unter e2) beispielhaft genannten Art unter Einhaltung eines NCO/H-Aktiv-Verhältnisses von 1,1 : 1 bis 1 : 0,5 zu versetzen, so dass in der acetonischen Lösung eine Kettenverlängerung des NCO-Prepolymeren unter Bildung eines hochmolekularen Polyurethans stattfindet, worauf sich die Dispergierung der acetonischen Lösung in Wasser, gegebenenfalls unter anschliessender destillativer Entfernung des Acetons, anschliesst.

Eine weitere Möglichkeit der Herstellung der erfindungsgemässen Dispersionen besteht darin, die genannten NCO-Prepolymeren als Schmelze oder in Form einer Lösung in Aceton oder N-Methylpyrrolidon mit Wasser oder einer wässrigen Lösung eines Diaminkettenverlängerungsmittels der unter e2) beispielhaft genannten Art zu vermengen, so dass die Dispergierung des NCO-Prepolymeren in Wasser mit seiner Kettenverlängerung zum hochmolekularen, in Wasser dispergierten Polyurethan einhergeht.

Eine weitere Möglichkeit besteht schliesslich darin, die genannten NCO-Prepolymeren als Schmelze oder in Form einer Lösung mit einem mit Wasser mischbaren Lösungsmittel der soeben beispielhaft genannten Art mit blockierten Kettenverlängerungsmitteln der unter e4) beispielhaft genannten Art zu vermischen und diese Mischungen anschliessend in Wasser zu dispergieren. Auch hier erfolgt gleichzeitig eine Dispergierung des NCO-Prepolymeren und die Kettenverlängerung zum hochmolekularen, in Wasser dispergierten Polyurethan.

Bei den beiden letztgenannten Methoden werden die in Wasser gelösten bzw. die blockierten aminischen bzw. hydrazinischen Kettenverlängerungsmittel im allgemeinen in einer solchen Menge eingesetzt, dass auf jede Isocyanatgruppe des NCO-Prepolymeren 0,5 bis 1,2 freie bzw. blockierte aminische oder hydrazinische Aminogruppen entfallen.

Bei allen Methoden der Herstellung der erfindungsgemässen Dispersionen wird die Wassermenge so bemessen, dass letztendlich Dispersionen mit einem Feststoffgehalt (ohne Einbeziehung von gegebenenfalls vorliegenden Hilfs- und Zusatzmitteln) von 25 bis 55 Gew.-% entstehen.

Den erfindungsgemässen Dispersionen können die üblichen, aus der Beschichtungstechnologie bzw. der Chemie der Polyurethandispersionen bekannten Hilfs- und Zusatzmittel einverleibt werden. Hierzu gehören beispielsweise Vernetzer wie Melaminharze wie z.B. Hexamethoxymethylmelamin, Formaldehyd oder blockierte Polyisocyanate, anorganische oder organische Pigmente, Weichmacher wie Phthalate oder hydrophobe Öle. Besonders vorteilhaft ist in vielen Fällen die Mitverwendung von Melaminharzen, insbesondere von Hexamethoxymethylmelamin, in einer Menge von 0,5 bis 10 Gew.-%, bezogen auf dispergiertes Polyurethan, um auf diese Weise Polyurethandispersionen zu erhalten, die zu hochwertigen, hitzevernetzbaren Beschichtungen verarbeitet werden können.

Die erfindungsgemässen, gegebenenfalls Hilfs- und Zusatzmittel der zuletzt beispielhaft genannten Art enthaltenden Polyurethandispersionen stellen besonders wertvolle Beschichtungsmittel für beliebige flexible oder nicht-flexible Substrate dar. Sie eignen sich besonders gut als Lacke zur Beschichtung von nicht flexiblen Substraten wie Metallen und Holz.

Die nachfolgenden Beispiele dienen der weiteren

Erläuterung der Erfindung. Alle Prozentangaben beziehen sich auf Gewichtsprozente.

*Beispiel 1*

611 g (0,35 Mol) eines Polyesterdiols der OH-Zahl 64 auf Basis von äquimolaren Mengen Phthalsäure und Adipinsäure als Säurekomponente und von Ethylenglykol als Diolkomponente (PEP) werden auf 90°C erhitzt. Anschliessend werden 72 g (0,3 Mol) 2,2-Bis-(4-hydroxycyclohecyl)-propan (BHP) in dem vorgelegten Polyesterdiol gelöst. Die Lösung wird anschliessend während eines Zeitraums von 30 Minuten bei 110°C unter einem Vakuum von ca. 20 mbar entwässert. Dann werden bei 90°C 168 g (1 Mol) 1,6-Diisocyanatohexan (HDI) hinzugefügt. Die so erhaltene Mischung wird während eines Zeitraums von ca. 25 Minuten bei ca. 115°C (Luftkühlung) gehalten. Anschliessend wird noch während eines Zeitraums von ca. 5 h bei 110°C nachgerührt. Das so erhaltene NCO-Prepolymer wird dann in eine 85%ige Lösung in Aceton überführt. Zu dieser Lösung wird dann bei ca. 60°C eine 50%ige acetonische Lösung des Triethylammonium-Salzes der 2,2-Dimethylolpropionsäure (DMPA-TEA) in Aceton hinzugefügt [47 g (0,2 Mol) des Salzes]. Das so erhaltene Reaktionsgemisch wird dann während eines Zeitraums von 2 h bei 60°C gerührt und anschliessend bei 55°C durch Zugabe von weiterem Aceton auf einen Feststoffgehalt von 40% verdünnt. Schliesslich wird in die so erhaltene acetonische Lösung des anionisch modifizierten NCO-Prepolymeren bei ca. 45°C Wasser in einer Menge von 2700 g eingerührt, wobei die Wasserzulaufgeschwindigkeit ca. 45 g/min beträgt. Nach Abdestillieren des Acetons im Vakuum wird schliesslich eine stabile erfindungsgemässe Dispersion eines anionisch modifizierten Polyurethans mit einem Feststoffgehalt von 35% erhalten.

*Beispiele 2-13*

Es wird wie in Beispiel 1 beschrieben verfahren, wobei die in Tabelle 1 genannten Ausgangsmaterialien in den angegebenen Mengen zum Einsatz gelangten. Es resultierten jeweils stabile erfindungsgemässe Polyurethandispersionen.

TABELLE 1

| Beispiel | HDI[a] | PEP[a] | BHP[a] | DMPA-TEA[a] |
|---|---|---|---|---|
| 2 | 1 | 0,200 | 0,450 | 0,150 |
| 3 | 1 | 0,175 | 0,475 | 0,150 |
| 4 | 1 | 0,165 | 0,500 | 0,185 |
| 5 | 1 | 0,165 | 0,500 | 0,168 |
| 6 | 1 | 0,165 | 0,500 | 0,150 |
| 7 | 1 | 0,150 | 0,500 | 0,178 |
| 8 | 1 | 0,150 | 0,500 | 0,150 |
| 9 | 1 | 0,150 | 0,500 | 0,126 |
| 10 | 1 | 0,100 | 0,550 | 0,200 |
| 11 | 1 | 0,100 | 0,550 | 0,150 |
| 12 | 1 | 0,075 | 0,575 | 0,150 |
| 13 | 1 | 0,350 | 0,300 | 0,200 |

[a]Angaben in Mol

*Beispiele 14-18*

Entsprechend der Verfahrensweise des Beispiels 1 werden aus den in nachstehender Tabelle 2 aufgelisteten Ausgangsmaterialien erfindungsgemässe Polyurethandispersionen hergestellt.

Wie aus Tabelle 2 weiter hervorgeht, führt der teilweise Ersatz des HDI durch cycloaliphatisches Diisocyanat (IPDI bzw. CHDI) neben einer geringen Härteerhöhung zu einer beträchtlichen Haftungsverbesserung. Zu diesem Ergebnis kommt man, wenn man den Korrosionsschutz von beschichteten Stahlblechen bei der Wasserlagerung als Mass für die Güte der Filmhaftung heranzieht. Für diesen Test werden Stahlbänder nach erfolgter Beschichtung und Trocknung des Films bei 50°C in 5%iger Kochsalzlösung gelagert und der zeitliche Verlauf der Rostunterwanderung verfolgt. Während der reine «HDI-PUR-Überzug» bereits nach 1½ Tagen ein erstes Auftreten von Rostflecken zeigt, führt der Ersatz von nur 10 Mol-% des HDI durch IPDI (Beispiel 15) zu einem Überzug, der noch nach 8tägiger Lagerung praktisch unversehrt ist.

TABELLE 2

| Beispiel | Zusammensetzung[a] | | | | | | Eigenschaften der Filme | | |
|---|---|---|---|---|---|---|---|---|---|
| | HDI | IPDI | CHDI[b] | PEP | BHP | DMPA-TEA | BH[c] | d[d] | $t_R$[e] |
| 14 | 1 | - | - | 0,165 | 0,5 | 0,165 | 61 | 101 | 1-2 |
| 15 | 0,9 | 0,1 | - | 0,165 | 0,5 | 0,165 | 66 | 74 | >8 |
| 16 | 0,75 | 0,25 | - | 0,165 | 0,5 | 0,165 | 76 | 84 | >8 |
| 17 | 0,5 | 0,5 | - | 0,165 | 0,5 | 0,165 | - | - | >8 |
| 18 | 0,9 | - | 0,1 | 0,165 | 0,5 | 0,165 | 69 | 47 | 4-5 |

[a]Angaben in Mol
[b]1,4-Diisocyanatocyclohexan
[c]Buchholzhärte gemäss DIN 53 153
[d]Schichtdicke in µm
[e]Zeit in Tagen bis zum Auftreten von Rostflecken

*Beispiele 19-23* (Zusatz von Melaminharz)

Durch Zusatz von Melaminharz (Hexamethoxymethylmelamin, abgekürzt: HMM) zu den erfindungsgemässen Dispersionen kann eine optimale Vernetzung der aus den Dispersionen hergestellten Beschichtungen bei 140°C erzielt werden. Die in nachstehender Tabelle 3 zusammengefassten Daten zeigen den Einfluss des Zusatzes von HMM auf die Buchholzhärte (BH). Die den Versuchen zugrundeliegende erfindungsgemässe Dispersion wurde in Analogie zu Beispiel 1 aus HDI, PEP, BHP und DMPA-TEA im Molverhältnis 1 : 0,2 : 0,45 : 0,15 hergestellt. Das Melaminharz wurde den einzelnen Proben der 35%igen Dispersion in den in Tabelle 3 angegebenen Mengen einverleibt. Bei den Testkörpern handelt es sich um mit den Dispersionen beschichtete Glasplatten. Beschichtungen wurden jeweils durch 30minütiges Erhitzen auf 140°C ausgehärtet.

TABELLE 3

| Beispiel | 19 | 20 | 21 | 22 | 23 |
|---|---|---|---|---|---|
| HMM[f] | 0 | 10 | 20 | 25 | 30 |
| BH[c] | 127 | 156 | 156 | 140 | 180 |
| d[d] | 14 | 15 | 18 | 15 | 18 |
| BH[g] | 127 | 140 | 156 | 166 | 148 |
| d[d] | 17 | 15 | 17 | 20 | 21 |

[c] Buchholzhärte gemäss DIN 53 153
[d] Schichtdicke in µm
[f] Angaben in Gewichtsprozent, bezogen auf PUR-Feststoff
[g] Buchholzhärte (DIN 53 163) nach 10tägiger Lagerung in entionisiertem Wasser (20°C) und 14tägiger Trocknung an der Luft (20°C).

*Beispiel 24*

Der Dispersion gemäss Beispiel 7 werden 1,74 Gew.-%, bezogen auf dispergiertes Polyurethan, an HMM zugesetzt. Ein auf eine Glasplatte aufgetragener Film dieser Dispersion mit einer Schichtdicke von 20 µm wird während 30 Minuten bei 140°C ausgehärtet. Der so erhaltene Film zeigt nach 16tägiger Lagerung in entionisiertem Wasser bei 45°C eine Wasseraufnahme von lediglich 2 Gew.-%. Ein entsprechender Versuch ohne Zusatz von HMM führt zu einer Wasseraufnahme von 19 Gew.-%. Das gleiche Ergebnis (Wasseraufnahme = 2 Gew.-%) wird dann erhalten, wenn der Dispersion gemäss Beispiel 7 vor dem Dispersionsschritt das Melaminharz hinzugefügt wird.

**Patentansprüche**

1. Gegebenenfalls Hilfs- und Zusatzmittel der Beschichtungstechnologie enthaltende, wässrige Dispersionen von Carboxylatgruppen aufweisenden Polyurethanen auf Basis von Polyesterdiolen, organischen Diisocyanaten mit aliphatisch und/oder cycloaliphatisch gebundenen Isocyanatgruppen, niedermolekularen Glykolen und gegebenenfalls weiteren Aufbaukomponenten mit gegenüber Isocyanatgruppen reaktionsfähigen Wasserstoffatomen, dadurch gekennzeichnet, dass die dispergierten Polyurethane

a) 18 bis 40 Gew,-% an Struktureinheiten der Formel

-CO-NH-$R^1$-NH-CO-,

b) 0 bis 20 Gew.-% an Struktureinheiten der Formel

-CO-NH-$R^2$-NH-CO-,

c) 25 bis 70 Gew.-% an Struktureinheiten der Formel

-O-$R^3$-O-,

d) 8 bis 30 Gew.-% an Struktureinheiten der Formel

-O-$R^4$-O- und

e) bis zu 25 Gew.-% an anderen, zumindest zum Teil Carboxylatgruppen tragenden Struktureinheiten aufweisen, wobei die Gesamtmenge an Carboxylatgruppen in den Polyurethanen bei 10 bis 60 Milliäquivalenten pro 100 g Feststoff liegt,

und wobei sich die genannten Prozentangaben auf das Gewicht des dispergierten Polyurethans beziehen und zu 100 ergänzen, und wobei

$R^1$ für den die Isocyanatgruppen von 1,6-Diisocyanatohexan und/oder 1-Isocyanato-3,3,5-trimethyl-5-isocyanatomethyl-cyclohexan verknüpfenden Kohlenwasserstoffrest steht,

$R^2$ für den die Isocyanatgruppen von 4,4'-Diisocyanato-dicyclohexylmethan und/oder 1,4-Diisocyanatocyclohexan verknüpfenden Kohlenwasserstoffrest steht,

$R^3$ für den oder die, die endständigen Hydroxylgruppen von einem oder mehreren Polyesterdiolen verknüpfenden Rest(e) steht, wobei in diesem Rest bzw. in diesen Resten mindestens zwei unterschiedliche Dicarbonsäuren über Estergruppen eingebaut vorliegen, und wobei der oder die Reste $R^3$ zumindest zu 20 Gew.-% aus Phthalsäure- und/oder Isophthalsäureeinheiten der Formel

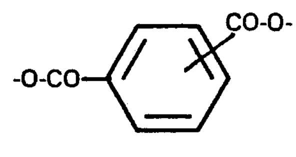

besteht bzw. bestehen, und

$R^4$ für den die Hydroxylgruppen von 2,2-Bis-(4-hydroxycyclohexyl)-propan verknüpfenden Kohlenwasserstoffrest steht.

2. Wässrige Dispersionen gemäss Anspruch 1, dadurch gekennzeichnet, dass das dispergierte Polyurethan

e) gegebenenfalls neben weiteren Struktureinheiten e) 2 bis 7 Gew.-% an Struktureinheiten der Formel

-O-$R^5$-O-

aufweist, wobei

$R^5$ für den die Hydroxylgruppen einer zumindest teilweise in der Ammoniumsalzform vorliegenden aliphatischen Dihydroxycarbonsäure eines maximalen Molekulargewichts von 300 verknüpfenden Rest steht.

3. Verwendung der wässrigen Dispersionen gemäss Anspruch 1 und 2 als Beschichtungsmittel für beliebige flexible oder nicht-flexible Substrate.

4. Verwendung der wässrigen Dispersionen gemäss Anspruch 1 und 2, in Kombination mit 0,5 bis 10 Gew.-%, bezogen auf dispergiertes Polyurethan, an Melaminharzen als hitzevernetzbares Beschichtungsmittel für Hitze-resistente Substrate.

## Claims

1. Aqueous dispersions — optionally containing coating auxiliaries and additives — of polyurethanes containing carboxylate groups based on polyester diols, organic diisocyanates containing aliphatically and/or cycloaliphatically bound isocyanates groups, low molecular weight glycols and, optionally, other synthesis components containing isocyanate-reactive hydrogen atoms, characterized in that the dispersed polyurethanes contain

a) 18 to 40% by weight of structural units corresponding to the formula

-CO-NH-$R^1$-NH-CO-,

b) 0 to 20% by weight of structural units corresponding to the formula

-CO-NH-$R^2$-NH-CO-,

c) 25 to 70% by weight of structural units corresponding to the formula

-O-$R^3$-O-,

d) 8 to 30% by weight of structural units corresponding to the formula

-O-$R^4$-O- and

e) up to 25% by weight of other structural units at least partly containing carboxylate groups, the total quantity of carboxylate groups in the polyurethanes being from 10 to 60 milliequivalents per 100 g solids,

and the percentages shown being based on the weight of the dispersed polyurethane and totalling 100, and

$R^1$ representing the hydrocarbon radical attaching the isocyanate groups of 1,6-diisocyanatohexane and/or 1-isocyanato-3,3,5-trimethyl-5-isocyanatomethyl cyclohexane,

$R^2$ representing the hydrocarbon radical attaching the isocyanate groups of 4,4'-diisocyanatodicyclohexyl methane and/or 1,4-diisocyanatocyclohexane,

$R^3$ representing the radical(s) attaching the terminal hydroxyl groups of one or more polyester diols, at least two different dicarboxylic acids in these radicals being incorporated through ester groups and at least 20% by weight of the radicals $R^3$ consisting of phthalic acid and/or isophthalic acid units corresponding to the formula

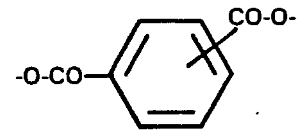

and

$R^4$ representing the hydrocarbon radical attaching the hydroxyl groups of 2,2-bis-(4-hydroxycyclohexyl)-propane.

2. Aqueous dispersions as claimed in claim 1, characterized in that the dispersed polyurethane contains

e) optionally in addition to other structural units e) 2 to 7% by weight of structural units corresponding to the following formula

-O-$R^5$-O-

in which

$R^5$ represents the radical attaching the hydroxyl groups of an aliphatic dihydroxycarboxylic acid at least partly present in the ammonium salt form and having a maximum molecular weight of 300.

3. The use of the aqueous dispersions claimed in claims 1 and 2 as coating compositions for flexible or non-flexible substrates.

4. The use of the aqueous dispersions claimed in claims 1 and 2 in combination with 0.5 to 10% by weight, based on dispersed polyurethane, of melamine resins as heat-crosslinkable coating compositions for heat-resistant substrates.

## Revendications

1. Dispersions aqueuses, contenant éventuellement des adjuvants et additifs de la technologie des revêtements, de polyuréthannes porteurs de groupes carboxylate à base de polyesterdiols, de diisocyanates organiques porteurs de groupes isocyanates en liaison aliphatique et/ou cycloaliphatique, de glycols de bas poids moléculaire et le cas échéant d'autres constituants porteurs d'atomes d'hydrogène aptes à vis-à-vis de groupes isocyanato, caractérisées en ce que les polyuréthannes dispersés présentent:

a) 18 à 40% en poids de motifs structuraux de formule

-CO-NH-$R^1$-NH-CO-,

b) 0 à 20% en poids de motifs structuraux de formule

-CO-NH-$R^2$-NH-CO-,

c) 25 à 70% en poids de motifs structuraux de formule

-O-$R^3$-O-,

d) 8 à 30% en poids de motifs structuraux de formule

-O-$R^4$-O- et

e) jusqu'à 25% en poids d'autres motifs structuraux portant au moins en partie des groupes carboxylate, la quantité totale de groupes carboxylate dans les polyuréthannes étant de 10 à 60 milliéquivalents par 100 g de matière solide,

et les indications mentionnées de pourcentages se rapportant au poids du polyurethanne dispersé et se complétant à 100, et

$R^1$ représente le reste hydrocarboné reliant les groupes isocyanato du 1,6-diisocyanatohexane et/ou du 1-isocyanato-3,3,5-triméthyl-5-isocyanatométhyl-cyclohexane,

$R^2$ est le reste hydrocarboné reliant les groupes isocyanato du 4,4'-diisocyanato-dicyclohexylméthane et/ou du 1,4-diisocyanatocyclohexane,

$R^3$ représente le ou les restes reliant les groupes hydroxyle terminaux d'un ou plusieurs polyesterdiols, ce ou ces restes présentant, incorporés par l'intermédiaire de groupes ester, au moins deux acides dicarboxyliques différents et le ou les restes $R^3$ étant constitués en proportion d'au moins 20% en poids de motifs acide phtalique et/ou acide isophtalique de formule

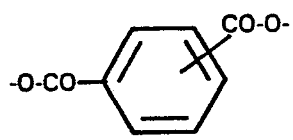

et

$R^4$ représente le reste hydrocarboné reliant les groupes hydroxyle du 2,2-bis-(4-hydroxycyclohexyl)-propane.

2. Dispersions aqueuses suivant la revendication 1, caractérisées en ce que le polyuréthanne dispersé présente

e) le cas échéant à côté d'autres motifs structuraux e), 2 à 7% en poids de motifs structuraux de formule

$$-O-R^5-O-$$

$R^5$ représente le reste reliant les groupes hydroxyle d'un acide dihydroxycarboxylique aliphatique au moins partiellement présent sous la forme du sel d'ammonium, ayant un poids moléculaire maximal de 300.

3. Utilisation des dispersions aqueuses suivant les revendications 1 et 2 comme agents de revêtement pour des substrats flexibles ou non flexibles quelconques.

4. Utilisation des dispersions aqueuses suivant les revendications 1 et 2, conjointement avec 0,5 a 10% en poids, par rapport au polyuréthanne dispersé, de resines de mélamine comme compositions de revêtement réticulables à chaud pour des substrats résistant à la chaleur.